# EUROPEAN PATENT SPECIFICATION

(11) **EP 2 882 903 B1**
(45) Date of publication and mention of the grant of the patent: **20.07.2016**
(21) Application number: 13729516.8
(22) Date of filing: 28.05.2013
(51) Int. Cl.: E02D 19/10, F04B 35/04

(54) **COVER OF A PUMP**
ABDECKUNG EINER PUMPE
COUVERCLE D'UN POMP

(30) Priority: 06.06.2012 NL 2008950
(43) Date of publication of application: 17.06.2015
(73) Proprietor: B.B.A. Participaties B.V., 7382 AJ Klarenbeek (NL)
(72) Inventor: BRUIN, Johannes, NL-7382 AJ Klarenbeek (NL); BRUIN, Harmen, NL-7325 WV Apeldoorn (NL)
(74) Representative: Dokter, Hendrik Daniel
(86) International application number: PCT/NL2013/050387
(87) International publication number: WO 2013/183991

(56) References cited:
- US-A- 779 907

## Description

The invention relates to a valve seat for a valve for a piston pump, for instance a piston pump for drainage by well points, comprising a ring with a flat side and a disc with a flat side received within this ring, wherein the flat sides of the ring and the disc lie in one plane.

Such a valve seat is per se known as for instance by US 779 907 A1 and is applied in a non-return valve on the suction or pressure side in a piston pump. In the known valve seat the assembly of disc and ring forms a seat for a valve assembled from a round flat sealing ring of for instance rubber which is received for displacement in its axial direction against a metal support. The disc and the ring are rigidly connected by means of for instance four, five or six arms extending radially as spokes from the disc to the ring. In its closed state the valve rests with the surface of the sealing disc in sealing contact on the assembly of disc, arms and ring. In its opened state the valve is displaced in axial direction relative to the plane of disc, arms and ring, and liquid, for instance water, flows through the spaces bounded by the ring, the arms and the disc.

An inherent drawback of the known valve seat is that the radially extending arms form a flow resistance to the liquid flowing between the disc and ring in the opened state of the valve and are thus a factor limiting the flow rate of the liquid flow between the disc and the ring. Increasing the flow rate by increasing the dimensions of the ring or reducing the dimensions of the disc is possible in principle, but this respectively increases the costs of manufacture and operation or detracts from the robustness and reliability of the valve seat.

It is an object of the invention to provide a valve seat with which, when the valve is opened, a higher flow rate of a liquid flow can be realized than with a prior art valve seat of the same dimensions, and which can be manufactured and operated at substantially the same cost without detracting from the robustness and reliability of the valve seat.

These objects are realized, and other advantages gained, with a valve seat of the type stated in the preamble wherein according to the invention the ring and the disc are coupled by at least two arcuate arms extending from the side remote from the flat side of the disc.

Because the arcuate arms extend from the side remote from the flat side of the disc, they form no, or at least a relatively low, flow resistance to the liquid flowing between the disc and the ring in the opened state of the valve, and thus enable a greater flow rate of the liquid flow between the disc and the ring than in the case of a prior art valve seat.

In an embodiment of a valve seat according to the invention the disc is round and the arcuate arms extend radially in axial projection.

In an advantageous embodiment the number of arcuate arms is three.

It has been found that the number of three arcuate arms in a valve seat according to the invention enables a relatively great increase in the liquid flow rate through the valve seat, while the coupling between disc and ring is sufficiently robust and results in a reliable operation of the respective valve.

In an embodiment the valve seat according to the invention is manufactured from a plastic material.

In another embodiment the valve seat is manufactured from a metal, preferably bronze.

The invention also relates to a valve for a piston pump assembled from a movable valve part and a valve seat in accordance with the above specification.

The invention will be elucidated hereinbelow on the basis of exemplary embodiments and with reference to the drawings.

In the drawings
Fig. 1a is a perspective view of the flat side of an embodiment of a valve seat according to the invention,
Fig. 1b is a perspective view of the side of the valve seat shown in fig. 1a remote from the flat side, and
Fig. 2 shows in projection a part of a double-action piston pump with a valve incorporating the valve seat shown in fig. 1a.

Corresponding components are designated in the figures with the same reference numerals.

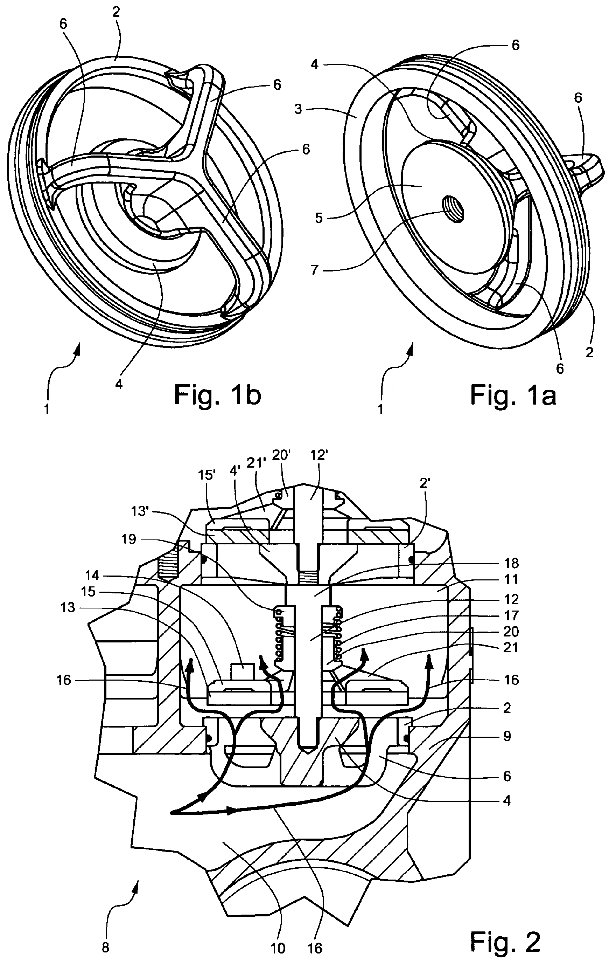

Fig. 1a shows a valve seat 1 assembled from a ring 2 with a flat side 3 and a disc 4 with a flat side 5 received within this ring 2. The flat sides 3, 5 of ring 2 and disc 4 lie in one plane. Ring 2 and disc 4 are coupled by three arcuate arms 6 extending from the side remote from the flat side 5 of disc 3. The figure also shows a threaded hole 7 for a bolt 12 (shown in fig. 2).

Fig. 1b shows valve seat 1 of fig. 1a as seen on the side remote from the flat side 3, 5.

Fig. 2 shows a part of a double piston pump 8 with a housing 9 for a valve, with an inlet chamber 10 and an outlet chamber 11 separated by a valve. The valve is assembled from valve seat 2, 4, 6 which is coupled with a bolt 12 to a valve part movable in axial direction and assembled from a rubber sealing ring 13 which is provided with protrusions 14 and which supports against a metal support ring 15 provided with receiving holes corresponding to protrusions 14. The movable valve part 13, 15 is displaceable under pressure of a spring 17 in axial direction between a closed state, in which sealing ring 13 rests on valve seat 2, 4, 6, and an opened state as shown in which valve part 13, 15 is pressed away from valve seat 2, 4, 6 by the pressure of inflowing liquid, represented by arrows 16. Spring 17 is confined by an upper ring 19 under the head 18 of bolt 12 and a lower ring 20 coupled fixedly to carrier bodies 21 extending upward at an angle from support ring 15. The figure also shows a part of a second valve assembled from a movable valve part 13', 15', 21' and a valve seat 2', 4' according to the prior art, in addition to a second bolt 12' and a second lower ring 20'.

## Claims

1. Valve seat (1) for a valve for a piston pump, comprising a ring (2) with a flat side (3) and a disc (4) with a flat side (5) received within this ring (2), wherein the flat sides (3, 5) of the ring (2) and the disc (4) lie in one plane, **characterized in that** the ring (2) and the disc (4) are coupled by at least two arcuate arms (6) extending from the side remote from the flat side (5) of the disc (4).

2. Valve seat (1) as claimed in claim 1, **characterized in that** the disc (4) is round and the arcuate arms (6) extend radially in axial projection.

3. Valve seat (1) as claimed in claims 1-2, **characterized in that** the number of arcuate arms (6) is three.

4. Valve seat (1) as claimed in any of the claims 1-3, **characterized in that** it is manufactured from a plastic material.

5. Valve seat (1) as claimed in any of the claims 1-3, **characterized in that** it is manufactured from a metal.

6. Valve seat (1) as claimed in claim 5, **characterized in that** the metal is bronze.

7. Valve for a piston pump assembled from a movable valve part (13, 14) and a valve seat (1) as claimed in any of the claims 1-6.

## Patentansprüche

1. Ventilsitz (1) für ein Ventil für eine Kolbenpumpe, umfassend einen Ring (2) mit einer flachen Seite (3) und einer innerhalb dieses Rings (2) aufgenommenen Scheibe (4) mit einer flachen Seite (5), wobei die flachen Seiten (3, 5) des Rings (2) und der Scheibe (4) in einer Fläche liegen, **dadurch gekennzeichnet, dass** der Ring (2) und die Scheibe (4) durch mindestens zwei sich ab der von der flachen Seite (5) der Scheibe (4) abgewandten Seite erstreckenden bogenförmigen Arme (6) verbunden sind.

2. Ventilsitz (1) gemäß Anspruch 1, **dadurch gekennzeichnet, dass** die Scheibe (4) rund ist und die bogenförmigen Arme (6) sich in axialer Projektion radial erstrecken.

3. Ventilsitz (1) gemäß einem der Ansprüche 1-2, **dadurch gekennzeichnet, dass** die Zahl der bogenförmigen Arme (6) drei ist.

4. Ventilsitz (1) gemäß einem der Ansprüche 1-3, **dadurch gekennzeichnet, dass** dieser aus einem Kunststoffmaterial hergestellt ist.

5. Ventilsitz (1) gemäß einem der Ansprüche 1-3, **dadurch gekennzeichnet, dass** dieser aus einem Metall hergestellt ist.

6. Ventilsitz (1) gemäß Anspruch 5, **dadurch gekennzeichnet, dass** das Metall Bronze ist.

7. Ventil für eine Kolbenpumpe, zusammengesetzt aus einem bewegbaren Ventilteil 13, 14 und einem Ventilsitz 1 gemäß einem der Ansprüche 1-6.

## Revendications

1. Siège de soupape (1) pour une soupape pour une pompe à piston, comprenant un anneau (2) présentant un côté plat (3), et un disque (4) présentant un côté plat (5) reçu à l'intérieur de cet anneau (2),
dans lequel les côtés plats (3, 5) de l'anneau (2) et du disque (4) sont situés dans un même plan,
**caractérisé en ce que** l'anneau (2) et le disque (4) sont couplés l'un à l'autre par au moins deux bras courbes (6) qui s'étendent à partir du côté distant du côté plat (5) du disque (4).

2. Siège de soupape (1) selon la revendication 1, **caractérisé en ce que** le disque (4) est rond, et les bras courbes (6) s'étendent radialement en une projection axiale.

3. Siège de soupape (1) selon les revendications 1 et 2, **caractérisé en ce que** le nombre de bras courbes (6) est de trois.

4. Siège de soupape (1) selon l'une quelconque des revendications 1 à 3, **caractérisé en ce qu'**il est fabriqué à partir d'une matière plastique.

5. Siège de soupape (1) selon l'une quelconque des revendications 1 à 3, **caractérisé en ce qu'**il est fabriqué à partir d'un métal.

6. Siège de soupape (1) selon la revendication 5, **caractérisé en ce que** le métal est le bronze.

7. Soupape pour une pompe à piston assemblée à partir d'une partie de soupape mobile (13, 14) et d'un siège de soupape (1) selon l'une quelconque des revendications 1 à 6.
